**Europäisches Patentamt**

**European Patent Office**

**Office européen des brevets**

(11) Publication number: **0 015 060**
**B1**

(19)
(12) **EUROPEAN PATENT SPECIFICATION**

(45) Date of publication of patent specification: **09.09.87**

(51) Int. Cl.⁴: **A 46 B 13/02,** A 46 B 9/04, A 46 B 9/12

(21) Application number: **80300163.5**

(22) Date of filing: **17.01.80**

(54) **Mechanical toothbrush.**

(30) Priority: **31.01.79 US 8064**

(43) Date of publication of application:
**03.09.80 Bulletin 80/18**

(45) Publication of the grant of the patent:
**09.09.87 Bulletin 87/37**

(84) Designated Contracting States:
**AT BE CH DE FR GB IT LU NL SE**

(56) References cited:
**CH-A- 166 451**
**DE-C- 634 607**
**FR-A-2 161 599**
**FR-A-2 333 466**
**GB-A- 29 592**
**GB-A- 973 270**
**US-A-1 414 645**
**US-A-1 707 118**
**US-A-2 002 320**
**US-A-2 246 867**
**US-A-3 984 890**
**US-A-4 011 616**

(73) Proprietor: **Solow, Terry Samuel**
**410 Playa Boulevard**
**La Selva Beach California 95076 (US)**

(72) Inventor: **Solow, Terry Samuel**
**410 Playa Boulevard**
**La Selva Beach California 95076 (US)**

(74) Representative: **Horton, Andrew Robert Grant et al**
**BOULT, WADE & TENNANT 27 Furnival Street**
**London, EC4A 1PQ (GB)**

Courier Press, Leamington Spa, England.

## Description

The present invention relates to a mechanical toothbrush and in particular to a mechanical toothbrush wherein at least two mechanically-driven brushes are mounted in a head in such a manner that the brush elements can be passed over a row of teeth, brushing both sides of a tooth at the same time as well as the top of the tooth. US—A—1414645 discloses a toothbrush having a pair of opposed rotary brushes and means for rotating said brushes, and a fixed brush at a point intermediate said rotary brushes.

US—A—3984890 discloses an electromechanical toothbrush having opposed sets of bristles for simultaneously brushing both the inner and outer surfaces of teeth and reciprocating one set back and forth, and a central hub element for brushing the chewing surfaces of the teeth fixed to and moving with the reciprocating set of bristles.

The present invention provides a toothbrush including a head which carries a pair of brushes which face directly or obliquely inwardly towards each other so that they can brush respective sides of a tooth at the same time, and means for vibrating each brush, characterised in that the head includes an enclosed space behind each brush and the means for vibrating includes means for conveying fluid pressure or suction to each space.

The angle between the brushes is preferably such that the bristles of the brushes approach each side of a tooth at an acute angle, so that the bristles enter and clean the sulcus area and embrasures. The brushes are preferably made to vibrate in the manner of a pneumatic hammer so that the bristles vibrate back and forth along their axes. This vibratory mode for the bristles is important for the efficient cleaning of the sulcus area, the embrasures and the teeth.

In accordance with the invention, the head contains a pair of brushes and, in accordance with other preferred embodiments of the invention, three or more brushes may be employed.

The head is preferably rotatably mounted on a handle. Thus, as is later explained in detail, the relative angular position of the head and handle can be altered for bushing in various parts of the mouth. The head and handle may be freely relatively rotatable, but may be coupled by a swivel including a detent which locks the head into one of several possible positions with respect to the handle.

Various embodiments of the invention will now be described with reference to the accompanying drawings, in which:—

Figure 1 is a plan view of a toothbrush embodying the present invention showing its use in brushing the molars and the bicuspids;

Figure 2 is a view, similar to Figure 1, showing the toothbrush in use for brushing the incisors and the canines;

Figure 3 is a plan view of another toothbrush wherein the head is free to rotate with respect to the handle;

Figure 4 is an enlarged perspective view of the toothbrush's head;

Figure 5 is a side view, partially in section, showing one form of actuating mechanism for the brushes;

Figure 6 is a sectional view on the line 6—6 of Figure 1, showing the action of the brushes on a molar;

Figure 7 is a sectional view showing the action of the bristles on an incisor;

Figure 8 is a sectional view showing a bellows arrangement for driving the bristles;

Figure 9 is a simplified sectional view of a modification in which a separate set of bristles is provided for the top or biting surfaces of the teeth;

Figure 10 is a plan view in section of a brush head showing a pair of brushes whose bristles brush both sides of a tooth and two narrow brushes that brush the biting surfaces of the teeth;

Figure 11 is a plan view in section wherein the side brushes are split into double pairs; the bristles of these brushes brush both sides of the teeth and a narrow brush brushes the tops of the teeth;

Figure 12 is a plan view in section of a brush head wherein three sets of brushes are used on each side of a tooth for better cleaning action in the embrasures and sulcus and two narrow brushes brush the biting surfaces of the teeth;

Figure 13 is a diagrammatic plan view showing a different means for guiding a roller;

Figure 14 is a plan view in section wherein the side brushes are split into double pairs; the bristles of these brushes brush both sides of the teeth and two narrow brushes brush the biting surfaces of the teeth;

Figure 15 is a plan view of an electrically motor-driven toothbrush having a built-in rechargeable battery; and

Figure 16 is a plan view of a brush wherein the relative positions of the head and handle are fixed.

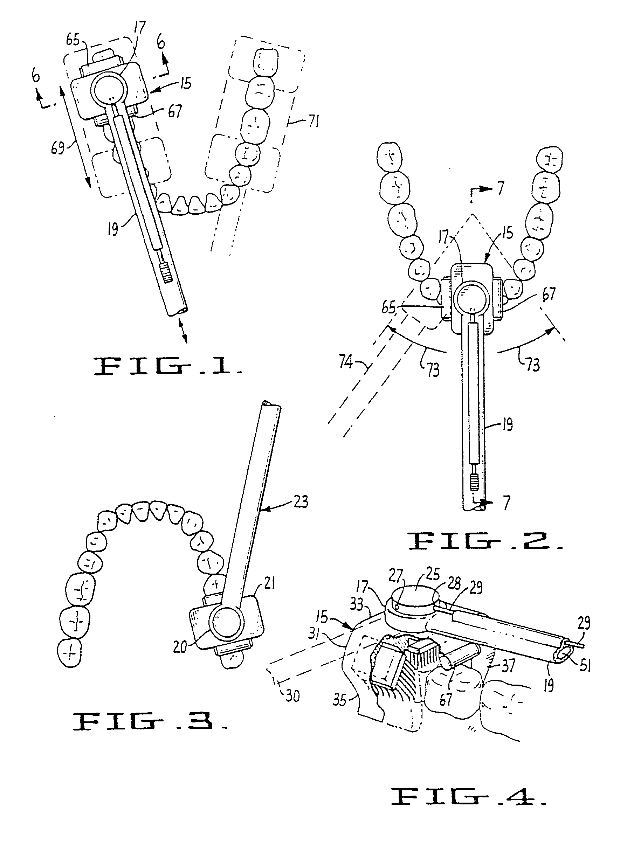

In Figures 1 and 2 is shown a toothbrush which includes a head 15 connected by a swivel 17 to a handle 19. In this and other preferred embodiments of the invention the head 15 can rotate with respect to the handle 19 swivel 17 for reasons which will be set out in detail; and in Figures 1, 2, 4 and 5, the relative position of the head and handle is held in a desired angular relationship by way of a detent. This detent is desirable but not necessary and, in the embodiment shown in Figure 3, the head 21 is free to rotate with respect to the handle 23 *via* a swivel 20 and the teeth themselves will guide the head 21 in the correct angular relationship.

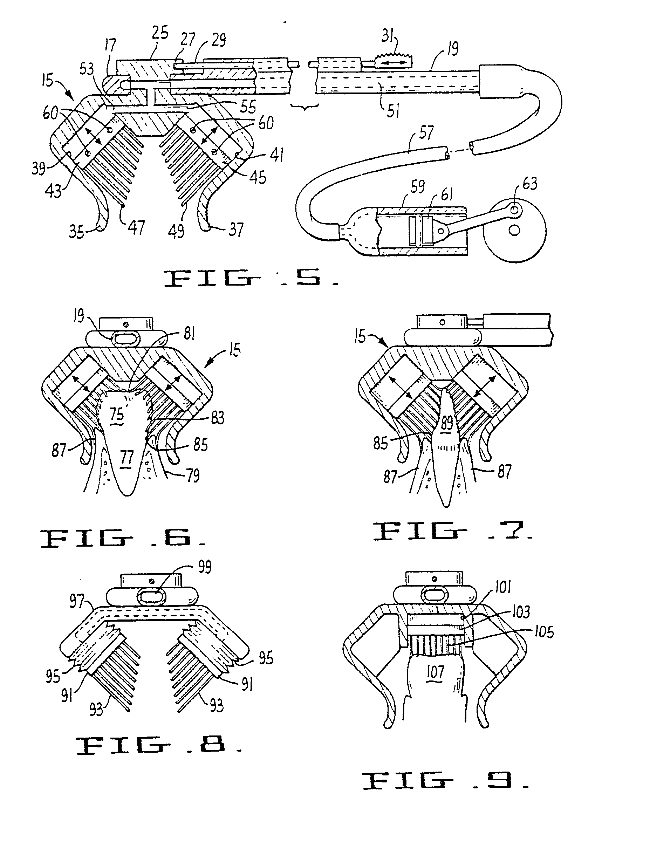

It is desirable to provide means for holding the head in either one of two positions, 90° apart relative to the handle. Figure 1 shows the head 15 perpendicular to the handle 19 and Figure 2 shows the head 15 shifted 90° so that it is parallel to the handle 19. Figure 4 shows a perspective view showing the handle 19 in a similar position to that shown in Figure 1. Figure 4 shows a handle 30 (in dashed lines) in the said other 90° position.

As is best seen in Figures 4 and 5, the head 15 is provided with a top cap 25, which mates with the swivel 17 and which has two recesses, 27 and 28, which are 90° apart. The handle 19 is provided with a detent pin 29, which can be moved in and out by means of a knurled handle 31, so that one can retract the handle 31, turn the head 15 to a desired position, and advance the handle 31 to lock the head in a desired position with respect to the handle. The pin 29 could be spring-loaded and the recesses 27 and 28 could be shallow so that when the head is turned to a desired position the detent pin would then snap into one of the two recesses 27 or 28 and hold it in that position. Additional depressions may be provided at other angles.

The head 15 has a casing 31 which includes a top 33 and sides 35 and 37 which extend downwardly so that the sides substantially encompass all the tooth and a neighbouring portion of the gum. Within the head 15 are the individual brushes; ordinarily two to eight brushes would be employed, depending on the required cost of manufacture and the desired speed and brushing efficiency of the toothbrush.

Various methods can be used for actuating the individual brushes but a preferred method is a pneumatic method as is best seen in Figure 5. Here the head 15 is shaped to provide two chamber walls 39 and 41 and each of the chamber has a piston which is a tight fit with the chamber walls and can move back and forth therein. To each piston is attached by screws 60 the respective base of two brushes 43 and 45 having sets of bristles 47 and 49 respectively embedded in the base. The brushes 43 and 45 can be easily changed by undoing the screws 60.

The head 15 may be provided with rollers 65 and 67 (shown in Figures 1 and 2) that maintain the head and its reciprocating brushes at a fixed height above the tops or biting surfaces of the teeth. Smooth gliding surfaces may be substituted for the rollers where lower manufacturing costs are required.

In the embodiment shown in Figure 5, the handle 19 is hollow and has an internal passage 51 which is connected by the passages 53 and 55 to a head space above the brushes 43 and 45. The passage 51 is connected by a flexible tube 57 to a cylinder 59 having a piston 61 driven by a crank 63. Reciprocation of the piston 61 will produce suction and excess pressure alternately in the space above the pistons 43 and 45 and cause them each to move up and down. A hydraulic arrangement could be used instead of the pneumatic system.

The arrangement shown in Figure 3 can be the same as that of Figure 5 except that here the detent is omitted so that the head can rotate freely with respect to the handle. This, in effect, makes the toothbrush self-aligning.

One method of using the toothbrush will now be described. One first turns the head 17 at right angles to the handle 19 as is shown in Figure 1. As can be seen, the molars and bicuspids are in a substantially straight line. One places the brush over the molars, as is shown on the left hand side of Figure 1, turns on the power, and then moves the brush back and forth over the molars and bicuspids as indicated by the arrow 69. One now moves the head to the opposite sides of the dental arch, as is shown by dashed lines 71 on the right hand side of Figure 1 and repeats the operation with these molars and bicuspids. Now one inverts the brush and runs it over the upper molars and bicuspids of the upper dental arch in a similar manner.

One now rotates the head 15 (90°) so it is in line with the handle 19 as is shown in Figure 2. The brush is placed over the incisors and moved back and forth through an arc covering the canines and the incisors as is indicated by the arrows 73. In a similar fashion, after the lower canines and incisors are cleaned, the toothbrush is turned over for cleaning the upper canines and incisors. Of course, if the embodiment shown in Figure 3 is employed, it is not necessary to set the head 21: as the teeth are brushed, the head will naturally follow the contours of the teeth and rotate with respect to the handle 23 consequentially.

The action of the toothbrush is shown on various types of teeth in Figures 6 and 7. In Figure 6 a molar having a crown 75 and a root 77 bounded by gum 79 is shown and the head 15 has been rotated so that it is perpendicular to the handle 19, i.e. similar to that shown in Figure 1. It will be seen that the bristles brush the top flat surface 81, the sides 83, as well as the important sulcus area 85, and that the bristles also massage the neighbouring gum 87.

In the configuration shown in Figure 7, the head 15 has been turned 90° so that it is now parallel to handle 19; the toothbrush is shown brushing an incisor 89. As before, it will be seen that all of the surfaces of the tooth including the sulcus 85 are thoroughly brushed and the gum 87 is gently massaged.

Various methods can be used to actuate the brush elements and another embodiment of the invention is shown in Figure 8 wherein a base 91 for the bristles 93 is connected by means of a bellows 95 to a head 97, which is connected by a tube 99 to a source of alternating suction and pressure for driving the bristles as previously described.

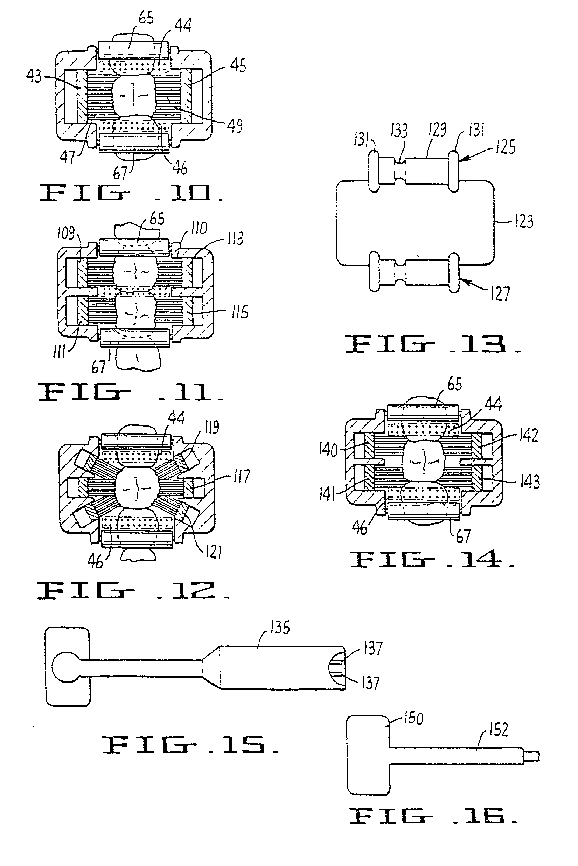

It suffices to use only one pair of brushes, there being a brush on each side, because the bristles of these brushes can be caused to clean even the top surface of a molar as is shown in Figure 6 as well as the sides. However, it is more desirable to provide a third or top brush as is shown in Figure 9 to clean the top surfaces of the teeth more quickly and efficiently. In this Figure the side brushes are not illustrated; they are as previously described. The top brush may be chosen to be in the same plane as the side brushes and designed to reciprocate either in-phase or in anti-phase with the side brushes.

Alternatively the top brush may be narrow and offset from the side brushes, as is shown in Figures 10, 11, 12 and 14, which illustrate both a single top brush (110) and a pair of top brushes (44 and 46). Because they are in different operating planes, all the brushes can be shaped as desired yet not interfere with any other brush.

In the arrangements shown in Figures 10, 11, 12 and 14, all side brushes (when viewed in cross-section) have their bristles striking the tooth and sulcus areas at an acute angle to the tooth, similar to that shown in Figures 6 and 7.

Figure 10 shows a sectional view through a brush head. It will be seen that bristles 47 and 49 of brushes 43 and 45 brush the sides of the molar as well as entering the embrasures between the teeth. Brushes 44 and 46 brush the tops or biting surfaces of the teeth.

Figure 11 is a similar plan view showing another embodiment of the invention wherein pairs of brushes are used on each side of the teeth; thus, this Figure shows the brushes 109 and 111 on one side of the teeth, while brushes 113 and 115 are on the opposite side. A single brush 110 brushes the tops of the teeth. This embodiment is particularly effective in keeping the toothbrush centered over the teeth (as a train stays on its rails) if the pairs of brushes are driven in anti-phase, because there is much less room for the head to wander from the desired central position over the teeth. When the brush pair 111 and 115 release their hold on the teeth, brushes 109 and 113 apply their hold and so on.

In Figure 12, another embodiment of the invention is shown; a set of three brushes is used on each side of the tooth. This Figure also shows that the brushes can be set at various angles around the tooth. For example, the brush 117 is set laterally of the tooth whereas the brushes 119 and 121 are set obliquely. This is particularly effective in entering the embrasures and sulcus areas.

In Figure 13, a diagrammatic view is shown of a head 123 having guiding rollers 125 and 127. Each roller has an intermediate portion 129 which glides over the surfaces of the teeth and rims 131 and inhibits the sliding of the roller off the molars and bicuspids. The notches 133 in the rollers aid in centering the brush heads over the incisors and the canines.

Figure 14 is another embodiment of the invention, similar to that in Figure 11 but with pairs, top brushes 44 and 46 and side brushes 140, 141, 142 and 143.

In the embodiment shown in Figure 15, a handle 135 encloses an electric driving motor and rechargeable battery, and terminals 137 for connecting the battery to a recharger. The motor could drive the crank 63 of Figure 5: the hollow handle 19 could be attached directly to cylinder 59 so that the system of Figure 5 would be built into the handle shown in Figure 15. Other well known reciprocating systems may be built into the handle such as vibrating rods and strings or reciprocating cams or gears (not shown).

In the embodiment shown in Figure 16, head 150 is fixed with respect to handle 152. In this case, the user would brush his molars and bicuspids as shown in Figure 1. To brush the incisors and canines, the user simply would turn the toothbrush handle manually, thereby rotating the head into the proper position.

Ordinarily, it is not necessary to provide any means for adjusting the position of the piston chambers or other means for holding the brushes, since usually sufficient movement or throw is imparted to the brushes to clean anything from the largest to the smallest tooth, as is shown in Figures 6 and 7. However, in some instances, it is desirable to provide for such an adjustment so that the brushes are set farther apart for a molar and closer together for a small tooth such as an incisor. This is easily achieved by means of a cam or gear arrangement, so that as the head is turned 90° relative to the handle, the piston chambers are brought nearer or farther apart.

**Claims**

1. A toothbrush including a head which carries a pair of brushes (43, 45) which face directly or obliquely inwardly towards each other so that they can brush respective sides of a tooth at the same time, and means (51, 53, 59, 61, 63) for vibrating each brush, characterised in that the head includes an enclosed space (39, 41) behind each brush and the means for vibrating includes means (59, 61, 51, 53, 55) for conveying fluid pressure or suction to each space.

2. A toothbrush according to claim 1 in which each brush (43, 45) is disposed for forward and backward movement in the direction in which it faces.

3. A toothbrush according to claim 2 in which the bristles (47, 49) of each brush are aligned parallel to said direction.

4. A toothbrush according to any one of claims 1 to 3 in which there is more than one pair of said brushes (109, 113 and 111, 115).

5. A toothbrush according to claim 4 in which different pairs of brushes (119, 121) are relatively inclined at different angles to each other.

6. A toothbrush according to claim 4 or claim 5 in which the different pairs of brushes are arranged to be vibrated in different phases.

7. A toothbrush according to any foregoing claim in which the head has at least one guide (125, 127) for guiding the head above the tops of teeth to be brushed.

8. A toothbrush according to claim 7 in which the guide (125, 127) is a roller.

9. A toothbrush according to claim 7 or claim 8 in which the guide or roller has marginal lips (131, 125).

10. A toothbrush according to any one of claims 7 to 9 in which the guide or roller has a groove (133) for engagement with the tops of incisors or canines.

11. A toothbrush according to any foregoing claim in which the head includes at least one additional brush (103) so positioned as to be able to brush the top of a tooth while the aforementioned brushes brush the sides of the tooth.

12. A toothbrush according to claim 11, including means (101) for vibrating the additional brush or brushes forwards and backwards.

13. A toothbrush according to any foregoing claim in which the head is pivotally connected to a handle (19).

14. A toothbrush according to claim 13, including a detent (27, 29) for setting the head at two or more angular positions relative to the handle.

15. A toothbrush according to any of claims 1 to 3, in which the said brushes are so dispersed that the sides and top of a tooth (75) can be brushed at the same time.

**Patentansprüche**

1. Eine Zahnbürste mit einem Kopf, welcher ein Paar Bürsten (43, 45) trägt, die unmittelbar oder winklig aufeinander weisen, so dass sie in der Lage sind, entsprechende Seiten eines Zahns gleichzeitig zu bürsten, und Einrichtungen (51, 53, 59, 61, 63) zum Schwingen jeder Bürste, dadurch gekennzeichnet, dass der Kopf einen geschlossenen Raum (39, 41) hinter jeder Bürste aufweist und die Schwingungseinrichtungen Vorrichtungen (59, 61, 51, 53, 55) enthalten, die Flüssigkeitsdruck bzw. -sog zu jedem Raum fördern.

2. Eine Zahnbürste nach Anspruch 1, in der jede Bürste (43, 45) zur hin- und hergehenden Bewegung in der Richtung angeordnet ist, in welche sie weist.

3. Eine Zahnbürste nach Anspruch 2, in welcher die Borsten (47, 49) jeder Bürste parallel mit der besagten Richtung ausgerichtet sind.

4. Eine Zahnbürste nach einem der Ansprüche 1 bis 3, bei welcher mehr als ein Paar der besagten Bürsten (109, 113 und 111, 115) vorgesehen sind.

5. Eine Zahnbürste nach Anspruch 4, bei der verschiedene Bürstenpaare (119, 121) relativ unter unterschiedlichen Winkeln zueinander angeordnet sind.

6. Eine Zahnbürste nach Anspruch 4 oder Anspruch 5, bei der die verschiedenen Bürstenpaare zum Schwingen in unterschiedlichen Phasen angeordnet sind.

7. Eine Zahnbürste nach einem der vorhergehenden Ansprüche, bei der der Kopf mindestens eine Führung (125, 127) zum Führen des Kopfes über die Spitzen der zu bürstenden Zähne aufweist.

8. Eine Zahnbürste nach Anspruch 7, bei der die Führung (125, 127) eine Rolle ist.

9. Eine Zahnbürste nach Anspruch 7 oder Anspruch 8, bei der die Führung oder die Rolle Randlippen (131, 125) aufweist.

10. Eine Zahnbürste nach einem der Ansprüche 7 bis 9, bei der die Führung bzw. die Rolle eine Nute (133) zum Eingriff mit den Spitzen der Schneid- bzw. Eckzähne aufweist.

11. Eine Zahnbürste nach einem der vorhergehenden Ansprüche, bei welcher der Kopf mindestens eine zusätzliche Bürste (103) aufweist, die derart angeordnet ist, dass sie die Spitze eines Zahnes bürsten kann, während die vorerwähnten Bürsten die Seiten des Zahns bürsten.

12. Eine Zahnbürste nach Anspruch 11, mit Einrichtungen (101) zum Vorwärts- und Rückwärtsschwingen der zusätzlichen Bürste oder Bürsten.

13. Eine Zahnbürste nach einem der vorhergehenden Ansprüche, bei der der Kopf schwenkbar an einem Griff (19) angebracht ist.

14. Eine Zahnbürste nach Anspruch 13, mit einer Raste (27, 29) zum Einstellen des Kopfes in zwei oder mehr winkligen Lagen mit Bezug auf den Griff.

15. Eine Zahnbürste nach einem der Ansprüche 1 bis 3, bei welcher die besagten Bürsten derart angeordnet sind, dass die Seiten und die Spitze eines Zahns (75) gleichzeitig gebürstet werden können.

**Revendications**

1. Brosse à dents comportant une tête qui porte deux brosses (43, 45) qui font face tout droit ou obliquement vers l'intérieur l'une vers l'autre de façon à pouvoir brosser simultanément des côtés respectifs d'une dent, et des moyens (51, 53, 59, 61, 63) propres à faire vibrer chaque brosse, caractérisée en ce que la tête comporte derrière chaque brosse un espace clos (39, 41) et les moyens propres à faire vibrer comportent des moyens (59, 61, 51, 53, 55) pour communiquer à chaque espace une pression de fluide ou une succion.

2. Brosse à dents selon la revendication 1, caractérisée en ce que chaque brosse (43, 45) est disposée pour se déplacer d'avant en arrière dans la direction dans laquelle elle fait face.

3. Brosse à dents selon la revendication 2, caractérisée en ce que les poils (47, 49) de chaque brosse sont alignés parallèlement à ladite direction.

4. Brosse à dents selon l'une quelconque des revendications 1 à 3, caractérisée en ce qu'il existe plus d'une paire desdites brosses (109, 113 et 111, 115).

5. Brosse à dents selon la revendication 4, caractérisée en ce que des paires de brosses différentes (119, 121) ont des inclinaisons relatives différentes l'une sur l'autre.

6. Brosse à dents selon la revendication 4 ou 5, caractérisée en ce que les différentes paires de brosses sont agencées pour vibrer selon des phases différentes.

7. Brosse à dents selon l'une quelconque des revendications précédentes, caractérisée en ce que la tête a au moins un guide (125, 127) pour la guider au-dessus des sommets des dents à brosser.

8. Brosse à dents selon la revendication 7, caractérisée en ce que le guide (125, 127) est un rouleau.

9. Brosse à dents selon la revendication 7 ou 8, caractérisée en ce que le guide ou rouleau a des lèvres marginales (131, 125).

10. Brosse à dents selon l'une quelconque des revendications 7 à 9, caractérisée en ce que le guide ou rouleau a une gorge (133) destinée à s'engager sur les sommets des incisives ou des prémolaires.

11. Brosse à dents selon l'une quelconque des revendications précédentes, caractérisée en ce que la tête comporte au moins une brosse additionnelle (103) disposée de façon à pouvoir brosser le sommet d'une dent pendant que les brosses précitées brossent les côtés de la dent.

12. Brosse à dents selon la revendication 11, caractérisée en ce qu'elle comporte des moyens (101) pour faire vibrer d'avant en arrière la ou les brosses additionnelles.

13. Brosse à dents selon l'une quelconque des revendications précédentes caractérisée en ce que la tête est articulée sur un manche (19).

14. Brosse à dents selon la revendication 13, caractérisée en ce qu'elle comporte un dispositif d'arrêt (27, 29) pour placer la tête dans deux ou plusieurs positions angulaires par rapport au manche.

15. Brosse à dents selon l'une quelconque des revendications 1 à 3, caractérisée en ce que lesdites brosses sont disposées de façon que les côtés et le sommet d'une dent (75) soient brossés simultanément.

FIG.1.

FIG.2.

FIG.3.

FIG.4.

FIG.5.

FIG.6.

FIG.7.

FIG.8.

FIG.9.

0 015 060

FIG .10.

FIG .11.

FIG .12.

FIG .13.

FIG .14.

FIG .15.

FIG .16.

3